# EUROPÄISCHE PATENTSCHRIFT

(11) **EP 3 645 593 B1**
(45) Veröffentlichungstag und Bekanntmachung des Hinweises auf die Patenterteilung: **07.06.2023**
(21) Anmeldenummer: 18733824.9
(22) Anmeldetag: 19.06.2018
(51) Int. Cl.: C08G 18/48, C08G 18/76

(54) **POLYURETHAN-WEICHSCHÄUME MIT VERBESSERTER LUFTDURCHLÄSSIGKEIT**
FLEXIBLE POLYURETHANE FOAMS HAVING IMPROVED AIR PERMEABILITY
MOUSSE SOUPLE EN POLYURÉTHANE AYANT UNE MEILLEURE PERMÉABILITÉ À L'AIR

(30) Priorität: 27.06.2017 EP 17178122
(43) Veröffentlichungstag der Anmeldung: 06.05.2020
(73) Patentinhaber: BASF SE, 67056 Ludwigshafen am Rhein (DE)
(72) Erfinder: OTERO MARTINEZ, Iran, 49448 Lemfoerde (DE); RAETH, Alexander, 49448 Lemfoerde (DE); WEISS, Patrick, 49448 Lemfoerde (DE); FRERICKS, Ansgar, 49448 Lemfoerde (DE); ALTMEPPEN, Sonja, 49448 Lemfoerde (DE)
(74) Vertreter: BASF IP Association
(86) Internationale Anmeldenummer: PCT/EP2018/066178
(87) Internationale Veröffentlichungsnummer: WO 2019/002013

(56) Entgegenhaltungen:
- EP-A1- 2 599 810
- DE-A1-102007 061 883

## Beschreibung

Die vorliegende Erfindung betrifft Polyol-Mischungen enthaltend (b1) mindestens ein Polyetherpolyol mit einer Hydroxylzahl von 10 bis 60 mg KOH/g mit einem hohen Ethylenoxidanteil, (b2) mindestens ein Polyetherpolyol mit einer Hydroxylzahl von 10 bis 100 mg KOH/g, einem geringen Ethylenoxidanteil und mindestens 40 % primären OH-Gruppen, sowie (b3) mindestens ein Polyetherpolyol mit einer Hydroxylzahl von 10 bis 100 mg KOH/g, einem geringen Ethylenoxidanteil und höchstens 30 % primären OH-Gruppen.

Weiterhin betrifft die Erfindung ein Verfahren zur Herstellung von Polyurethan-Weichschäumen unter Verwendung der erfindungsgemäßen Mischungen, die so erhältlichen Polyurethan-Weichschäume sowie die Verwendung der so erhältlichen Polyurethan-Weichschäume als Matratze oder Kissen, als Polsterelement für Möbel oder als Sitzelement.

Polyurethan-Weichschäume werden insbesondere zur Herstellung von Möbeln und Matratzen sowie für Autositze und Autoteppiche eingesetzt.

Wichtige Grundeigenschaften für diese Anwendungen sind mechanische Kenngrößen wie Härte, Elastizität, Dehnung und Zugfestigkeit. Für die meisten Anwendungen, wie beispielsweise Polsterungen für Sitze oder Matratzen, existieren feste Vorgaben für die Härte. Ein besonderes Komfortmerkmal von Polyurethan-Weichschäumen ist bei gegebener Härte eine hohe Elastizität. Weichschäume mit mindestens 30% Rückprallelastizität können dabei als elastisch bezeichnet werden, Weichschäume mit einer Rückprallelastizität von weniger als 30 % als viskoelastisch.

Ein weiterer wichtiger Parameter für Polyurethan-Weichschäume ist deren Dichte. Dabei ist man bestrebt, die Dichte aus Kosten- und Gewichtsgründen zu verringern, um möglichst wenig Material einzusetzen. Allerdings führt eine Verringerung der Dichte bei gleichbleibender Härte zu einer Verringerung der Elastizität.

Ein weiterer wichtiger Parameter für die Komforteigenschaften von Polyurethan-Weichschäumen in Sitz- und Liegemöbeln ist eine hohe Luftdurchlässigkeit.

Polyurethan-Weichschäume sind aus dem Stand der Technik bekannt.

Die EP2331597 A1 beschreibt die Herstellung von Polyurethan-Weichschäumen auf der Basis von Polyetherpolyolen mit einer Hydroxylzahl von 20 bis 100 mg KOH/g mit einem Ethylenoxidanteil von mindestens 40 Gew.-% als Zellöffnerpolyol in Kombination mit Polyetherpolyolen mit einer Hydroxylzahl von 20 bis 100 mg KOH/g und einem Ethylenoxidanteil von weniger als 40 Gew.-%.

Die WO 2009/003964 A1 offenbart Polyetherpolyolmischungen, die sowohl ein hydrophiles Polyetherpolyol mit einer Hydroxylzahl von 20 bis 200 mg KOH/g und mit mindestens 50 Gew.-% Ethylenoxidanteil als auch ein hydrophobes Polyetherpolyol mit einer Hydroxylzahl von 20 bis 100 mg KOH/g und mit mindestens 60 Gew.-% Propylenoxid enthalten, wobei letzteres terminale Ethylenoxidenden, d.h. primäre OH-Endgruppen, aufweist.

Die DE 10 2007 061 883 A1 offenbart eine Polyetherpolyol-Zusammensetzung für die Herstellung von viskoelastischen Polyurethan-Schäumen, umfassend verschiedene Polyetherpolyole und einer Dispersion eines Polymers in einem Polyetherpolyol.

Die EP 2 599 810 A1 offenbart ein Verfahren zur Herstellung von viskoelastischen Polyurethanweichschaumstoffen mit einer Luftdurchlässigkeit von mindestens 1 dm³/s bei dem man (a) Polyisocyanat mit (b) polymeren Verbindungen mit gegenüber Isocyanaten reaktiven Gruppen, (c) gegebenenfalls Kettenverlängerungs und/oder Vernetzungsmittel, (d) gegebenenfalls Verbindungen mit nur einer gegenüber Isocyanaten reaktiven Gruppe mit einer Hydroxylzahl von 100 bis 500 mgKOH/g, (e) Katalysator, (f) Treibmittel sowie gegebenenfalls (g) Zusatzstoffen zu einer Reaktionsmischung vermischt und zum Polyurethanweichschaumstoff umsetzt.

Polyurethan-Weichschäume mit einer Stauchhärte bei 40% nach DIN EN ISO 3386 von deutlich mehr als 2 kPa, einer Zugfestigkeit nach DIN EN ISO 1798 von mindestens 50 kPa, einer hohen Bruchdehnung von mindestens 100% nach DIN EN ISO 1798 und einer hohen Rückprallelastizität sind zwar bekannt.

Die bekannten Polyurethan-Weichschäume sind jedoch bezüglich ihrer Komfortmerkmale, insbesondere der Luftdurchlässigkeit, und ihren Dauergebrauchseigenschaften, insbesondere dem Härteverlust im Dauerschwingversuch nach DIN EN ISO 3385, verbesserungsbedürftig.

Es bestand daher die Aufgabe, die vorgenannten Nachteile zu vermeiden. Insbesondere sollte die Erfindung Polyurethan-Weichschäume zugänglich machen, die günstige Dauergebrauchseigenschaften und günstige Komforteigenschaften im Anwendungsgebiet Sitz- und Liegemöbel aufweisen.

Aufgabe der vorliegenden Erfindung war es insbesondere, Polyurethan-Weichschäume mit einer hohen Luftdurchlässigkeit und einem geringen Härteverlust im Dauerschwingversuch zugänglich zu machen.

Die Polyurethan-Weichschäume sollten gleichzeitig eine hohe Stauchhärte, Zugfestigkeit und Bruchdehnung einerseits und eine hohe Elastizität andererseits aufweisen.

Weiter war es Aufgabe der vorliegenden Erfindung, solche Polyurethan-Weichschäume zu liefern, die einen breiten Verarbeitungsbereich zeigen und als Blockweichschaum-Stoffe oder Formschaumstoffe herstellbar sind.

Demgemäß wurden die erfindungsgemäßen Mischungen, das erfindungsgemäße Verfahren zur Herstellung von Polyurethan-Weichschäumen und die so erhältlichen Polyurethan-Weichschäume gefunden.

Die vorliegende Erfindung betrifft Mischungen b) enthaltend folgende Komponenten b1) bis b3) sowie gegebenenfalls b4) und b5):
b1) 75 bis 94 Gew.-% mindestens eines Polyetherpolyols mit einer Hydroxylzahl von 10 bis 60 mg KOH/g, einer OH-Funktionalität von mehr als 2 und einem Ethylenoxidanteil von 50 bis 100 Gew.-% bezogen auf den Gehalt an Alkylenoxid,
b2) 3 bis 20 Gew.-% mindestens eines Polyetherpolyols mit einer Hydroxylzahl von 10 bis 100 mg KOH/g, einer OH-Funktionalität von mehr als 2, einem Ethylenoxidanteil von 2 bis 30 Gew.-% bezogen auf den Gehalt an Alkylenoxid und einem Anteil an primären OH-Gruppen von 40 bis 100 % bezogen auf die Gesamtzahl der OH-Gruppen in Komponente b2),
b3) 3 bis 20 Gew.-% mindestens eines Polyetherpolyols mit einer Hydroxylzahl von 10 bis 100 mg KOH/g, einer OH-Funktionalität von mehr als 2, einem Ethylenoxidanteil von 0 bis 30 Gew.-% bezogen auf den Gehalt an Alkylenoxid und einem Anteil an primären OH-Gruppen von 0 bis 30 % bezogen auf die Gesamtzahl der OH-Gruppen in Komponente b3),
   jeweils bezogen auf die gesamte Gewichtsmenge der Bestandteile b1) bis b3), die 100 Gew.-% ergibt,
   sowie
b4) von 0 bis 10 weitere Gewichtsteile mindestens eines weiteren Polyetherpolyols, welches sich von den Bestandteilen b1) bis b3) unterscheidet, bezogen auf 100 Gewichtsteile der Komponenten b1) bis b3) und
b5) von 0 bis 30 weitere Gewichtsteile Füllstoffe, bezogen auf 100 Gewichtsteile der Komponenten b1) bis b3), gegebenenfalls enthalten als Bestandteil eines Graftpolyols auf Basis einer oder mehrerer der Komponenten b1) bis b3).

Bevorzugte Ausführungsformen sind den Ansprüchen und der Beschreibung zu entnehmen. Kombinationen bevorzugter Ausführungsformen verlassen den Rahmen dieser Erfindung nicht. Nachfolgend werden bevorzugte Ausführungsformen näher erläutert.

Unter Funktionalität einer Verbindung soll im Rahmen der vorliegenden Erfindung die Zahl der reaktiven Gruppen pro Molekül verstanden werden. Eine mehrfunktionelle Verbindung weist dabei eine Funktionalität von mindestens 2 auf.

Im Falle der Polyetherpolyole der Mischung b) bezeichnet die Funktionalität die Zahl der reaktiven OH-Gruppen pro Molekül. Im Falle der Polyisocyanate der Komponente a) bezeichnet die Funktionalität die Zahl der reaktiven NCO-Gruppen pro Molekül.

Falls für eine bestimmte Komponente Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen, so dass unter Funktionalität stets die zahlenmittlere Funktionalität zu verstehen ist.

Unter Hydroxylzahl wird im Rahmen der vorliegenden Erfindung die gemäß DIN 53240 bestimmte Hydroxylzahl verstanden. Sie wird in mg KOH/g angegeben. Die Hydroxylzahl ist über die Formel Mn [g/mol] = (f * 56106 g/mol) / OHZ [mg/g] mit dem Molgewicht Mn verknüpft, wobei f die OH-Funktionalität des Polyetherpolyols ist.

Die Anteile primärer und sekundärer OH-Gruppen werden vorzugsweise aus den ¹H-NMR-Spektren der peracetylierten Polyetherpolyole gemäß ASTM D-4273-11 ermittelt.

Im Rahmen der Erfindung werden unter Polyurethan-Schäumen Schaumstoffe gemäß DIN 7726 verstanden. Dabei weisen erfindungsgemäße Polyurethan-Weichschäume vorzugsweise eine Druckspannung bei 40% Stauchung nach DIN EN ISO 3386 von 15 kPa und kleiner, besonders bevorzugt von 1 bis 14 kPa und insbesondere 2 bis 14 kPa auf. Erfindungsgemäße Polyurethan-Weichschäume verfügen über eine Offenzelligkeit nach DIN EN ISO 7231 von vorzugsweise größer 2,5 dm³/s, besonders bevorzugt größer 3,0 dm³/s, insbesondere größer 3,5 dm³/s. Weitere Details zu Polyurethan-Weichschäumen finden sich im "Kunststoffhandbuch, Band 7, Polyurethane", Carl Hanser Verlag, 3. Auflage 1993, Kapitel 5.

Erfindungsgemäß enthalten die Mischungen von 75 bis 94 Gew.-% (bezogen auf die gesamte Gewichtsmenge der Bestandteile b1) bis b3), die 100 Gew.-% ergibt) mindestens eines Polyetherpolyols mit einer Hydroxylzahl von 10 bis 60 mg KOH/g, einer OH-Funktionalität von mehr als 2 und einem Ethylenoxidanteil von 50 bis 100 Gew.-% bezogen auf den Gehalt an Alkylenoxid.

Derartige Polyetherpolyole können als Zellöffnerpolyole bezeichnet werden, da ihre Mitverwendung in der Regel zu einer erhöhten Offenzelligkeit der Polyurethan-Weichschäume führt. Erfindungsgemäß enthaltene Zellöffnerpolyole sind aus dem Stand der Technik bekannt. Die im Stand der Technik eingesetzten Mengen an Zellöffnerpolyol betragen bei der Herstellung von elastischen Schäumen in der Regel unter 20 Gew.-% der Polyolkomponente.

Der Anteil der Komponente b1) an der Gesamtmenge der Komponenten b1), b2) und b3) beträgt vorzugsweise von 78 bis 92 Gew.-%, insbesondere von 80 bis 90 Gew.-%, besonders bevorzugt von 82 bis 89 Gew.-%.

Die Hydroxylzahl der Polyetherpolyole der Komponente b1) beträgt vorzugsweise von 15 bis 58 mg KOH/g, insbesondere von 20 bis 55 mg KOH/g, besonders bevorzugt von 25 bis 50 mg KOH/g.

Die OH-Funktionalität der Polyetherpolyole der Komponente b1) beträgt vorzugsweise höchstens 8. Die OH-Funktionalität der Polyetherpolyole beträgt mehr als 2. Die OH-Funktionalität der Polyetherpolyole der Komponente b1) beträgt besonders bevorzugt von 2,2 bis 4, ganz besonders bevorzugt von 2,4 bis 3,3.

Der Anteil der primären OH-Gruppen der Polyetherpolyole der Komponente b1) beträgt vorzugsweise mindestens 40 %, besonders bevorzugt mindestens 50 %, insbesondere mindestens 60 %, ganz besonders bevorzugt mindestens 70 % bezogen auf die Gesamtzahl der OH-Gruppen, wobei die OH-Gruppen OH-Endgruppen sind und dabei primäre und sekundäre OH-Gruppen in Betracht kommen. In einer Ausführungsform liegen 100% primäre Endgruppen vor, wobei ausschließlich Ethylenoxid als Alkylenoxid verwendet wird.

Die Herstellung von Polyetherpolyolen gemäß Komponente b1) ist aus dem Stand der Technik bekannt. Geeignete Polyetherpolyole der Komponente b1) und ihre Herstellung werden beispielsweise in der DE4318120 näher beschrieben.

Für die Herstellung der Polyetherpolyole der Komponente b1) eingesetzte Starterverbindungen sind vorzugsweise hydroxyfunktionell oder aminofunktionell. Geeignete Starterverbindungen sind beispielsweise Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin, Trimethylolpropan, Saccharose und/oder Sorbitol eingesetzt.

Besonders bevorzugt erfolgt die Herstellung der Polyetherpolyole der Komponente b1) auf Basis von trifunktionellen Startern, insbesondere Glycerin.

Der Anteil von Ethylenoxid an der gesamten Gewichtsmenge Alkylenoxid in Komponente b1) beträgt vorzugsweise von 60 bis 100 Gew.-%, insbesondere von 65 bis 90 Gew.-%, besonders bevorzugt von 70 bis 85 Gew.-%. In einer ersten bevorzugten Ausführungsform wird als Alkylenoxid ausschließlich Ethylenoxid eingesetzt.

In einer weiteren bevorzugten Ausführungsform wird Ethylenoxid in Mischung mit mindestens einem weiteren Alkylenoxid verwendet. Geeignete weitere Alkylenoxide sind beispielsweise Propylenoxid, 1,2-Butylenoxid bzw. 2,3-Butylenoxid und Styroloxid. Vorzugsweise ist das weitere Alkylenoxid Propylenoxid.

Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Eine Erhöhung des Ethylenoxid-Gehalts im Ethylenoxid/Propylenoxid-Gemisch führt in der Regel zu einer Erhöhung des Anteils primärer OH-Gruppen im Polyetherpolyol. Der Anteil an primären OH-Endgruppen lässt sich durch späteres Zudosieren von reinem Ethylenoxid erhöhen. Produkte mit Ethylenoxidendblöcken weisen einen besonders hohen Anteil an primären OH-Gruppen auf.

Erfindungsgemäß enthalten die Mischungen b2) 3 bis 20 Gew.-% (bezogen auf die gesamte Gewichtsmenge der Bestandteile b1) bis b3), die 100 Gew.-% ergibt) mindestens eines Polyetherpolyols mit einer Hydroxylzahl von 10 bis 100 mg KOH/g, einer OH-Funktionalität von mehr als 2, einem Ethylenoxidanteil von 2 bis 30 Gew.-% bezogen auf den Gehalt an Alkylenoxid und einem Anteil an primären OH-Gruppen von 40 bis 100 % bezogen auf die Gesamtzahl der OH-Gruppen in Komponente b2).

Der Anteil der Komponente b2) an der Gesamtmenge der Komponenten b1), b2) und b3) beträgt vorzugsweise von 3 bis 18 Gew.-%, insbesondere von 4 bis 18 Gew.-%, besonders bevorzugt von 4 bis 15 Gew.-%.

Die Hydroxylzahl der Polyetherpolyole der Komponente b2) beträgt vorzugsweise von 15 bis 90 mg KOH/g, insbesondere von 20 bis 80 mg KOH/g, besonders bevorzugt von 25 bis 50 mg KOH/g.

Der Anteil der primären OH-Gruppen der Polyetherpolyole in Bestandteil b2) beträgt vorzugsweise von 50 bis 90 %, insbesondere von 60 bis 90 %, besonders bevorzugt 70 bis 90 %, bezogen auf die Gesamtzahl der OH-Gruppen in Komponente b2).

Die OH-Funktionalität der Polyetherpolyole der Komponente b2) beträgt größer 2, besonders bevorzugt mindestens 2,4 und insbesondere mindestens 2,6. Die OH-Funktionalität der Polyetherpolyole der Komponente b2) beträgt vorzugsweise höchstens 8, besonders bevorzugt höchstens 4 und insbesondere höchstens 3,3.

Polyetherpolyole der Komponente b2) weisen in einer ersten Ausführungsform eine OH-Funktionalität von mehr als 2 und höchstens 4, besonders bevorzugt von 2,4 bis 4, insbesondere von 2,6 bis 3,3 auf.

Es ist in einer weiteren Ausführungsform bevorzugt, in Komponente b2) hochfunktionelle Polyetherpolyole mit einer OH-Funktionalität von mehr als 4 und höchstens 8, besonders bevorzugt von mehr als 4 bis 6 zu verwenden. In dieser Ausführungsform wird besonders bevorzugt Saccharose, Sorbitol oder Mischungen daraus oder Mischungen der vorgenannten Verbindungen mit Glycerin als Starter verwendet.

Die Herstellung von Polyetherpolyolen gemäß Komponente b2) ist aus dem Stand der Technik bekannt. Geeignete Polyetherpolyole gemäß Komponente b2) können nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium-oder Kaliumethylat oder Kaliumisopropylat als Katalysatoren hergestellt werden. Eine solche Herstellungsweise wird in der DE4318120 näher beschrieben.

Für die Herstellung Polyetherpolyole der Komponenten b2) geeignete Starterverbindungen sind identisch mit den unter Komponente b1) genannten.

In einer bevorzugten Ausführungsform erfolgt die Herstellung der Polyetherpolyole der Komponente b2) auf Basis von tri- oder höherfunktionellen Startern, insbesondere trifunktionellen Startern, ganz besonders bevorzugt Glycerin.

Der Anteil von Ethylenoxid an der gesamten Gewichtsmenge Alkylenoxid in Komponente b2 beträgt vorzugsweise von 5 bis 30 Gew.-%, insbesondere von 5 bis 25 Gew.-%, besonders bevorzugt von 8 bis 22 Gew.-%. Somit wird Ethylenoxid in Mischung mit mindestens einem weiteren Alkylenoxid verwendet.

Geeignete weitere Alkylenoxide sind beispielsweise Propylenoxid, 1,2-Butylenoxid bzw. 2,3-Butylenoxid und Styroloxid. Vorzugsweise ist das weitere Alkylenoxid Propylenoxid.

Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Die Zugabe von reinem Ethylenoxid im letzten Schritt der Alkoxylierung ergibt Produkte mit Ethylenoxidendblöcken. Solche Produkte mit Ethylenoxidendblöcken weisen einen besonders hohen Anteil an primären Endgruppen auf.

In einer bevorzugten Ausführungsform wird Komponente b2 ganz oder teilweise in Form von Graftpolyolen, d.h. in Kombination mit Komponente b5 eingesetzt, um die Mischung b zu bilden. Diese Ausführungsform wird weiter unten im Rahmen von Komponente b5) näher erläutert.

Erfindungsgemäß enthalten die Mischungen b3) 3 bis 20 Gew.-% (bezogen auf die gesamte Gewichtsmenge der Bestandteile b1) bis b3), die 100 Gew.-% ergibt) mindestens eines Polyetherpolyols mit einer Hydroxylzahl von 10 bis 100 mg KOH/g, einer OH-Funktionalität von mehr als 2, einem Ethylenoxidanteil von 0 bis 30 Gew.-% bezogen auf den Gehalt an Alkylenoxid und einem Anteil an primären OH-Gruppen von 0 bis 30 % bezogen auf die Gesamtzahl der OH-Gruppen in Komponente b3).

Der Anteil der Komponente b3) an der Gesamtmenge der Komponenten b1), b2) und b3) beträgt vorzugsweise von 4 bis 18 Gew.-%, insbesondere von 4 bis 16 Gew.-%, besonders bevorzugt von 4 bis 15 Gew.-%, ganz besonders bevorzugt von 5 bis 14 Gew.-%.

Die Hydroxylzahl der Polyetherpolyole der Komponente b3) beträgt vorzugsweise von 15 bis 90 mg KOH/g, insbesondere von 20 bis 80 mg KOH/g, besonders bevorzugt von 25 bis 75 mg KOH/g, ganz besonders bevorzugt von 35 bis 65 mg KOH/g.

Der Anteil an primären OH-Gruppen der Polyetherpolyole in Bestandteil b3) beträgt vorzugsweise von 0 bis 25 %, insbesondere von 0 bis 20 %, ganz besonders bevorzugt von 0 bis 15 %, insbesondere von 0 bis 10 % bezogen auf die Gesamtzahl der OH-Gruppen in Komponente b3).

Die OH-Funktionalität der Polyetherpolyole der Komponente b3) beträgt größer 2, besonders bevorzugt mindestens 2,2 und insbesondere mindestens 2,4. Die OH-Funktionalität der Polyetherpolyole der Komponente b3) beträgt vorzugsweise höchstens 4, besonders bevorzugt höchstens 3 und insbesondere höchstens 2,8.

Polyetherpolyole der Komponente b3) weisen in einer Ausführungsform eine OH-Funktionalität von mehr als 2 und höchstens 4, besonders bevorzugt von 2,2 bis 3, insbesondere von 2,4 bis 2,8 auf.

Die Herstellung von Polyetherpolyolen gemäß Komponente b3) ist aus dem Stand der Technik bekannt. Geeignete Polyole werden nach bekannten Verfahren, beispielsweise durch anionische Polymerisation mit Alkalihydroxiden, wie z.B. Natrium- oder Kaliumhydroxid oder Alkalialkoholaten, wie z.B. Natriummethylat, Natrium-oder Kaliumethylat oder Kaliumisopropylat als Katalysatoren oder durch Doppelmetallcyanidkatalyse aus einem oder mehreren Alkylenoxiden mit 2 bis 4 Kohlenstoffatomen im Alkylenrest hergestellt. Solche Herstellungsverfahren werden beispielsweise in der DE4318120 und WO2006/034800 näher beschrieben.

Für die Herstellung der Polyetherpolyole der Komponenten b3) geeignete Starterverbindungen sind identisch zu den unter Komponente b1) ausgeführten.

In einer bevorzugten Ausführungsform erfolgt die Herstellung der Polyetherpolyole der Komponente b3) auf Basis von di-, tri- oder höherfunktionellen Startern, ganz besonders bevorzugt Glycerin, Monoethylenglykol und/oder Diethylenglykol.

Vorzugsweise umfasst das Alkylenoxid der Komponente b3) Propylenoxid. In einer ersten bevorzugten Ausführungsform wird als Alkylenoxid ausschließlich Propylenoxid eingesetzt.

In einer weiteren bevorzugten Ausführungsform wird Propylenoxid in Mischung mit mindestens einem weiteren Alkylenoxid verwendet. Geeignete weitere Alkylenoxide sind beispielsweise Ethylenoxid, 1,2-Butylenoxid bzw. 2,3-Butylenoxid und Styroloxid. Vorzugsweise ist das weitere Alkylenoxid Ethylenoxid.

Der Anteil von Ethylenoxid an der gesamten Gewichtsmenge Alkylenoxid in Komponente b3) beträgt vorzugsweise von 0 bis 20 Gew.-%, insbesondere von 0 bis 15 Gew.-%, besonders bevorzugt von 0 bis 12 Gew.-%.

Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Die Zugabe von reinem Propylenoxid oder Alkylenoxidmischungen mit überwiegend Propylenoxid im letzten Schritt der Alkoxylierung ergibt Produkte mit Propylenoxidendblöcken. Produkte mit Propylenoxidendblöcken weisen einen besonders hohen Anteil an sekundären OH-Gruppen auf.

In einer bevorzugten Ausführungsform wird ein Teil der Komponente b3) in Form von Graftpolyolen, d.h. in Kombination mit Komponente b5) zugegeben, um die erfindungsgemäße Mischung b zu bilden. Diese Ausführungsform wird weiter unten näher erläutert.

Erfindungsgemäße Mischungen b enthalten optional als Komponente b4) von 0 bis 10 weitere Gewichtsteile (bezogen auf 100 Gewichtsteile der Komponenten b1 bis b3) mindestens eines Polyetherpolyols, welches sich von den Bestandteilen b1) bis b3) unterscheidet.

In einer bevorzugten ersten Ausführungsform enthalten die erfindungsgemäßen Mischungen b keine weiteren Polyetherpolyole gemäß Komponente b4). In einer zweiten bevorzugten Ausführungsform enthalten die erfindungsgemäßen Mischungen b von 0,01 bis 10 weitere Gewichtsteile (bezogen auf 100 Gewichtsteile der Komponenten b1 bis b3) mindestens eines weiteren Polyetherpolyols, welches sich von den Bestandteilen b1) bis b3) unterscheidet, besonders bevorzugt von 1 bis 10 weitere Gewichtsteile, insbesondere von 1 bis 5 weitere Gewichtsteile.

Erfindungsgemäße Mischungen b) enthalten optional als Komponente b5) von 0 bis 30 weitere Gewichtsteile Füllstoffe, bezogen auf 100 Gewichtsteile der Komponenten b1) bis b3). Unter Füllstoff wird im Rahmen der vorliegenden Erfindung ein Feststoff verstanden. Die Füllstoffe sind vorzugsweise enthalten als Bestandteil mindestens eines Graftpolyols auf Basis der Komponenten b2) und/oder b3).

In einer ersten bevorzugten Ausführungsform enthalten die erfindungsgemäßen Mischungen keine Füllstoffe gemäß Komponenten b5). In einer zweiten bevorzugten Ausführungsform enthalten die erfindungsgemäßen Mischungen b) von 0,01 bis 30 weitere Gewichtsteile Füllstoffe bezogen auf 100 Gewichtsteile der Komponenten b1) bis b3), besonders bevorzugt von 0,2 bis 25 weitere Gewichtsteile, insbesondere von 0,3 bis 10 weitere Gewichtsteile, ganz besonders bevorzugt von 0,5 bis 8 weitere Gewichtsteile.

In einer bevorzugten Ausführungsform enthält die Mischung b) die Füllstoffe als Bestandteil von Graftpolyolen, d.h. in Kombination mit Polyetherpolyolen. Die Verwendung von Graftpolyolen führt zu einer verbesserten Zugfestigkeit. Die Verwendung von Graftpolyolen führt zudem zu einer besseren Kompatibilität und Langzeitstabilität der Mischungen b. Dabei ist es vorteilhaft, als Basispolymer für die Graftpolyole Polyetherpolyole gemäß Komponente b2 und/oder b3 zu verwenden. Derartige Graftpolyole sind aus dem Stand der Technik bekannt oder können nach bekannten Methoden hergestellt werden.

Als Füllstoff sind SAN-Partikel (Styrol-Acrylnitril-Partikel) besonders bevorzugt. Als Graftpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, zweckmäßigerweise in den vorgenannten Polyetherpolyolen hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin. Solche Herstellungsverfahren werden beispielsweise im "Dow Polyurethanes Flexible Foams", 2. Auflage 1997, Kapitel 2. näher beschrieben.

Alternativ können die Füllstoffe, die vorzugsweise als dispergierte Füllstoffteilchen vorliegen, auch im sogenannten Schmelzemulgierverfahren erhalten werden. Dieses Verfahren ist in WO2009/138379 beschrieben. Dabei wird ein thermoplastisches Polymer, gegebenenfalls zusammen mit Stabilisator, und Polyamin auf eine Temperatur oberhalb des Schmelzpunkts des thermoplastischen Polymers erwärmt, homogenisiert, beispielsweise mit Ultraschall, Extruder oder einer Zahnkranzdispergiermaschine und auf eine Temperatur unterhalb des Schmelzpunkts des thermoplastischen Polymers abgekühlt. Dabei können im Prinzip alle thermoplastischen Polymere eingesetzt werden. Vorzugsweise werden die thermoplastischen Polymere eingesetzt, die durch Polymerisation der oben genannten Monomere erhalten werden können. Gegebenenfalls wird weiter ein Emulgator zugegeben. Zum Beispiel können die Stabilisatoren und Emulgatoren eingesetzt werden, die in WO 2009/138379 beschrieben sind. In einer bevorzugten Ausführungsform ist das thermoplastische Polymer zum Einsatz im Schmelzemulgierverfahren bestehend aus Polystyrolacrylnitril.

Bevorzugte Mischungen b) enthalten von 80 bis 94 Gew.-% der Komponente b1), von 3 bis 18 Gew.-% der Komponente b2) und von 3 bis 16 Gew.-% der Komponente b3). Besonders bevorzugte Mischungen b) enthalten von 80 bis 92 Gew.-% der Komponente b1), von 4 bis 16 Gew.-% der Komponente b2) und von 4 bis 15 Gew.-% der Komponente b3). Darüber hinaus betrifft die vorliegende Erfindung ein Verfahren zur Herstellung von Polyurethan-Weichschäumen, bei dem man folgende Komponenten zu einer Reaktionsmischung vermischt und zum Polyurethan-Weichschaum umsetzt:
a) mindestens ein Polyisocyanat, wobei mindestens ein Polyisocyanat auf Basis von Diphenylmethandiisocyanat (MDI) enthalten ist,
b) eine erfindungsgemäße Mischung b,
c) gegebenenfalls Kettenverlängerungs- und/oder Vernetzungsmittel,
d) mindestens ein Katalysator, und
e) mindestens ein Treibmittel enthaltend Wasser, sowie gegebenenfalls
f) ein oder mehrere Zusatzstoffe, die sich von den Komponenten a) bis e) unterscheiden.

Zur Herstellung der Polyurethan-Weichschäume werden vorzugsweise zwei oder mehrere Flüssigkeitsströme miteinander vereinigt. Die Mischung dieser Flüssigkeitsströme initiiert die Polymerisation und das Aufschäumen des polymerisierenden Materials. Polymerisation und Formgebung erfolgen oft in einem Schritt, typischerweise durch Formgebung der noch im flüssigen Zustand befindlichen Reaktionsmischung. Daneben werden Polyurethane auch oft in Form von Blöcken hergestellt, welche anschließend in die gewünschte Form zurechtgeschnitten werden.

Bei den oben genannten zwei Flüssigkeitsströmen handelt es sich vorzugsweise um Komponente a) einerseits und um vorab miteinander gemischte Komponenten b), c), d), e) und gegebenenfalls f) andererseits. Bei der Herstellung von Blockschäumen werden in der Regel mehr als zwei Flüssigkeitsströme miteinander vereinigt.

Bevorzugte Komponenten a), c), d), e) und gegebenenfalls f) werden nachfolgend erläutert.

Unter Polyisocyanat soll im Rahmen der vorliegenden Erfindung ein mehrfunktionelles Isocyanat verstanden werden. Geeignete Polyisocyanate sind insbesondere solche auf Basis von Diphenylmethandiisocyanat (MDI) und Toluylendiisocyanat (TDI).

Im erfindungsgemäßen Verfahren wird als Komponente a) mindestens ein Polyisocyanat umgesetzt, wobei Komponente a) mindestens ein Polyisocyanat auf Basis von Diphenylmethandiisocyanat (MDI) enthält. Vorzugsweise besteht Komponente a) aus mindestens einem Polyisocyanat auf Basis von MDI.

Polyisocyanate auf Basis von MDI sind dabei 2,2'-Diphenylmethandiisocyanat, 2,4'-Diphenylmethandiisocyanat, 4,4'-Diphenylmethandiisocyanat sowie mehrkerniges Diphenylmethandiisocyanat (mehrkerniges MDI, d. h. mit 3 oder mehr Kernen), das auch als Polyphenylpolymethylenisocyanat oder oligomeres MDI bezeichnet wird, oder Mischungen aus zwei oder mehreren der vorgenannten Verbindungen, oder Roh-MDI, welches bei der Herstellung von MDI anfällt.

In einer Ausführungsform werden die vorgenannten Polyisocyanate auf Basis von MDI in Mischung mit weiteren Polyisocyanaten, insbesondere weiteren aromatischen Polyisocyanaten, vorzugsweise Toluylendiisocyanat (TDI), eingesetzt. In einer anderen bevorzugten Ausführungsform werden ausschließlich Polyisocyanate auf Basis von MDI umgesetzt.

Als Polyisocyanat auf Basis von MDI besonders bevorzugt ist mehrkerniges MDI in Mischung mit zweikernigem MDI, insbesondere 4,4'-MDI und gegebenenfalls 2,4'-MDI.

Oligomeres MDI enthält ein oder mehrere mehrkernige Kondensationsprodukte des MDI mit einer Funktionalität von mehr als 2, insbesondere 3 oder 4 oder 5. Üblicherweise wird oligomeres MDI im Gemisch mit monomerem MDI eingesetzt.

Komponente a) enthält vorzugsweise von 60 bis 100 Gew.-% 4,4'-MDI bezogen auf das Gesamtgewicht der Komponente a), insbesondere von 65 bis 90 Gew.-%, besonders bevorzugt von 68 bis 80 Gew.-%, insbesondere von 70 bis 80 Gew.-%.

Komponente a) enthält vorzugsweise von 65 bis 90 Gew.-% 4,4'-MDI, von 0 bis 20 Gew.-% 2,4'-MDI und von 10 bis 30 Gew.-% mehrkerniges MDI, jeweils bezogen auf das Gesamtgewicht der Komponente a).

Komponente a) enthält besonders bevorzugt von 68 bis 90 Gew.-%, insbesondere von 70 bis 80 Gew.-%, 4,4'-MDI, von 0 bis 20 Gew.-%, insbesondere von 1 bis 17 Gew.-%, besonders bevorzugt von 1 bis 12 Gew.-%, ganz besonders bevorzugt von 1 bis 10 Gew.-% 2,4'-MDI und von 10 bis 30 Gew.-%, insbesondere von 13 bis 28 Gew.-% mehrkerniges MDI, jeweils bezogen auf das Gesamtgewicht der Komponente a).

Eine entsprechende Zusammensetzung der Komponente a) führt zu einer hohen Stauchhärte und Bruchdehnung bei gleichzeitig hoher Rückprallelastizität und guten Dauergebrauchseigenschaften, ohne die Luftdurchlässigkeit zu beeinträchtigen.

Die (zahlenmittlere) Funktionalität der Komponente a) kann im Bereich von ungefähr 2 bis ungefähr 4 variieren, insbesondere von 2 bis 3, insbesondere von 2,1 bis 2,7.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat^{®} vertrieben.

Vorzugsweise beträgt der Gehalt an Isocyanatgruppen der Komponente a) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Iso-cyanatgruppen in mmol/g ergibt sich aus dem Gehalt in Gew.-% nach ASTM D-5155-96 A.

Die Viskosität der eingesetzten Komponente a) kann in einem weiten Bereich variieren. Vorzugsweise weist die Komponente a) eine Viskosität von 10 bis 300 mPa.s, besonders bevorzugt von 20 bis 250 mPa.s bei 25° C, auf.

In einer bevorzugten Ausführungsform wird Komponente a) ganz oder teilweise in Form von Polyisocyanatprepolymeren eingesetzt.

Diese Polyisocyanatprepolymere sind erhältlich, indem vorstehend beschriebene Polyisocyanate gemäß Komponente a) ganz oder teilweise vorab mit gegenüber Isocyanaten reaktiven polymeren Verbindungen zum Isocyanatprepolymer umgesetzt werden. Die Umsetzung erfolgt im Überschuss der Komponente a), beispielsweise bei Temperaturen von 30 bis 100 ° C, bevorzugt bei etwa 80 ° C. Die Verwendung von Polyisocyanatprepolymeren verbessert die Zugfestigkeit und die Rückprallelastizität der erfindungsgemäß erhältlichen Polyurethan-Weichschäume.

Geeignete polymere Verbindungen mit gegenüber Isocyanaten reaktiven Gruppen sind dem Fachmann bekannt und beispielsweise beschrieben im "Kunststoffhandbuch, 7, Polyurethane", Carl Hanser-Verlag, 3. Auflage 1993, Kapitel 3.1.

Als polymere Verbindungen mit gegenüber Isocyanaten reaktiven Gruppen kommen grundsätzlich alle bekannten Verbindungen mit mindestens zwei gegenüber Isocyanaten reaktiven Wasserstoffatomen in Betracht, beispielsweise solche mit einer Funktionalität von 2 bis 8 und einem zahlenmittleren Molekulargewicht Mn von 400 bis 15000 g/mol. So können beispielsweise Verbindungen, ausgewählt aus der Gruppe der Polyetherpolyole, Polyesterpolyole oder Mischungen daraus, verwendet werden.

Geeignete Präpolymere sind beispielsweise in der DE 10314762 ausgeführt.

Bevorzugte polymere Verbindungen mit gegenüber Isocyanaten reaktiven Gruppen sind Polyetherpolyole gemäß Komponente b1), b2) und/oder b3), insbesondere Polyetherpolyole gemäß Komponente b1). Die vorgenannten polymeren Verbindungen werden vorzugsweise mit den vorstehend genannten Polyisocyanaten umgesetzt, wobei letztere im Überschuss vorliegen.

Der NCO-Gehalt der verwendeten Prepolymere liegt vorzugsweise im Bereich von 20 bis 32,5%, besonders bevorzugt von 25 bis 31%. Der NCO-Gehalt wird gemäß ASTM D-5155-96 A) ermittelt.

In einer bevorzugten Ausführungsform werden in dem Verfahren zur Herstellung von Polyurethan-Weichschäumen als Komponente c) Kettenverlängerungs- und/oder Vernetzungsmittel verwendet.

Als Kettenverlängerer und Vernetzungsmittel c) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Werden Kettenverlängerungsmittel und/oder Vernetzungsmittel c) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Butandiol, 2-Methyl-1,3-propandiol, Sorbitol, Glycerin, Trimethylolpropan, Glycole und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.4 angegeben.

In einer bevorzugten Ausführungsform des erfindungsgemäßen Verfahrens wird mindestens ein Katalysator als Komponente d) verwendet.

Katalysatoren d) beschleunigen die Reaktion der Polyole b) und gegebenenfalls Kettenverlängerungs- und Vernetzungsmittel c) sowie Treibmittel e) mit der Komponente a) stark.

In einer Ausführungsform enthält Komponente d) einbaubare Aminkatalysatoren. Diese weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind beispielsweise Bisdimethylaminopropylharnstoff, Bis(N,N-Dimethylamino-ethoxyethyl)carbamat, Dimethylaminopropylharnstoff, N,N,N-Trimethyl-N-hydroxyethyl-bis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dime-thyaminopropyl-N,N-dimethylpropan-1,3-diamin, Dimethyl-2-(2-aminoethoxyethanol) und (1,3-Bis(dimethylamino)-propan-2-ol), N,N-Bis-(3-dimethylamino-propyl)-N-isopro-panolamin, Bis-(dimethylaminopropyl)-2-hydroxyethyl-amin, N,N,N-Trimethyl-N-(3 ami-nopropyl)-bis(aminoethylether), 3-Dimethylaminoisopropyl-diisopropanolamin oder Mischungen davon.

Neben den einbaubaren Aminkatalysatoren können weiter übliche Katalysatoren zur Herstellung der Polyurethane eingesetzt werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoatund Zinn-(II)-laurat und die Dialkylzinn-(IV)-salze von organischen Carbonsäuren, z.B. Dibutyl-zinndiacetat, Dibutylzinndilaurat, Zinn-Rizinolat, Dibutylzinn-maleat und Dioctylzinn-diacetat, sowie Zinkcarboxylate wie Zink-Rizinolat sowie Bismutcarboxylate, wie Bismut(III)-neode-canoat, Bismut-2-ethylhexanoat und Bismut-octanoat oder Mischungen davon. Die organischen Metallverbindungen können allein oder vorzugsweise in Kombination mit stark basischen Aminen eingesetzt werden.

Werden Katalysatoren d) eingesetzt, können diese beispielsweise in einer Menge von 0,001 bis 5 Gewichtsteilen, insbesondere 0,05 bis 2 Gewichtsteilen als Katalysator bzw. Katalysatorkombination, bezogen auf 100 Gewichtsteile der Komponente b), eingesetzt werden.

In dem erfindungsgemäßen Verfahren wird mindestens ein Treibmittel e) enthaltend Wasser eingesetzt.

Neben Wasser können grundsätzlich alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind neben Wasser auch Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden.

Vorzugsweise wird Wasser als alleiniges Treibmittel e) eingesetzt.

Vorzugsweise wird das Treibmittel in einer Menge eingesetzt, dass der resultierende Polyurethanschaumstoff eine Dichte von 10 bis 80 g/L, besonders bevorzugt 20 bis 60 g/L und insbesondere 25 bis 60 g/L aufweist.

Weiter können Hilfsmittel und/oder Zusatzstoffe f) eingesetzt werden, die sich von den Komponenten a) bis e) unterscheiden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4. beschrieben.

In Betracht kommen beispielsweise oberflächenaktive Substanzen, welche zur Unterstützung der Homogenisierung der Ausgangsstoffe dienen und gegebenenfalls auch geeignet sind, die Zellstruktur der Schaumstoffe zu regulieren. Genannt seien beispielhaft Siloxan-Oxyalkylen-Mischpolymerisate und andere Organopolysiloxane, ox-ethylierte Alkylphenole, oxethylierte Fettalkohole, Paraffinöle, Rizinusöl- bzw. Rizinolsäureester, die in Mengen von 0,2 bis 8, vorzugsweise von 0,5 bis 5 Gewichtsteilen pro 100 Gewichtsteile der Komponente b) eingesetzt werden.

Als Flammschutzmittel sind beispielsweise Phosphor- und/oder Halogenatome enthaltende Verbindungen, wie z. B. Trikresylphosphat, Tris-2-chlorethylphosphat, Tris-chlorpropylphosphat, 2,2-bis(chloromethyl)trimethylene-bis(bis(2-chloroethyl)phosphat), oligomere Organophosphoporverbindungen (beispielsweise Fyrol^{®} PNX, Fyrolflex^{®} RDP) und Tris-2,3-dibrompropylphosphat geeignet.

Außer den bereits genannten halogensubstituierten Phosphaten können auch anorganische Flammschutzmittel, beispielsweise Antimontrioxid, Arsenoxid, Ammoniumpolyphosphat, Blähgraphit und Calciumsulfat, oder Melamin zum Flammfestmachen der Polyurethanschaumstoffe verwendet werden.

Im Allgemeinen hat es sich als vorteilhaft erwiesen, 5 bis 50 Gewichtsteile, vorzugsweise 5 bis 35 Gewichtsteile der genannten Flammschutzmittel bezogen auf 100 Gewichtsteile Komponente b) zu verwenden.

Im Allgemeinen werden bei der Herstellung der erfindungsgemäßen Polyurethan-Weichschäume die Polyisocyanate a), die Polyole b), die Katalysatoren d), die Treibmittel e) und gegebenenfalls Kettenverlängerungsmittel und/oder Vernetzungsmittel c) und gegebenenfalls Zusatzstoffe f) bei Temperaturen von 0 bis 70 °C, vorzugsweise 15 bis 50 °C in solchen Mengen zur Umsetzung gebracht, dass das Äquivalenz-Verhältnis von NCO-Gruppen der Polyisocyanate a) zur Summe der reaktiven Wasserstoffatome der Komponenten b), c) und gegebenenfalls e) und f) 0,75 bis 1,5 zu 1, vorzugsweise 0,80 bis 1,25 zu 1 beträgt, besonders bevorzugt von 0,9 bis 1,2 zu 1, insbesondere von 0,95 bis 1,15 zu 1. Ein Verhältnis von 1 zu 1 entspricht dabei einem Isocyanatindex von 100.

Ein weiterer Gegenstand der vorliegenden Erfindung sind die nach dem erfindungsgemäßen Verfahren erhältlichen Polyurethan-Weichschaumstoffe.

Die erfindungsgemäß erhältlichen Polyurethan-Weichschäume weisen vorzugsweise eine Rückprallelastizitat nach DIN EN ISO 8307 von mindestens 30 %, bevorzugt mindestens 40 %, insbesondere mindestens 45 %, auf und zeigen eine Luftdurchlässigkeit nach DIN EN ISO 7231 von mindestens 3,0 dm³/s, bevorzugt mindestens 3,5 dm³/s, besonders bevorzugt mindestens 4,0 dm³/s und insbesondere mindestens 4,5 dm³/s.

Das Raumgewicht nach DIN EN ISO 845der erfindungsgemäßen Polyurethan-Weichschäume ist vorzugsweise kleiner als 150 g/l, vorzugsweise von 20 bis 100 g/l, besonders bevorzugt von 25 bis 80 g/l und insbesondere von 25 bis 60 g/l.

Die Stauchhärte bei 40% gemäß DIN EN ISO 3386 der erfindungsgemäß erhältlichen Polyurethanschaumstoffe beträgt vorzugsweise von 2 bis 10 kPa, besonders bevorzugt von 2,2 bis 6,5 kPa.

Gegenstand der vorliegenden Erfindung sind außerdem die Verwendungen der erfindungsgemäßen Polyurethanschaumstoffe als Matratze oder Kissen, als Polsterelement für Möbel oder als Sitzelement, insbesondere in Verkehrsmitteln wie z. B. Busse, Züge und Flugzeuge oder in Gebäuden wie z. B. Kinos, Theater, Büros, Stadien.

Besonders bevorzugt werden die erfindungsgemäßen Polyurethan-Weichschäume für Matratzen und Kissen eingesetzt. Die erfindungsgemäß verwendeten Mischungen eigenen sich zur Herstellung von Polyurethan-Weichschäumen nach dem Blockschaumverfahren und nach dem Formschaumverfahren.

Die erfindungsgemäßen Polyurethan-Weichschäume zeichnen sich durch gute mechanische Eigenschaften, insbesondere hohe Werte für die Zugfestigkeit und die Bruchdehnung aus. Gleichzeitig weisen die erfindungsgemäßen Polyurethan-Weichschäume hervorragende Luftdurchlässigkeiten und somit ein gutes Mikroklima bei Nutzung als Matratze oder Kopfkissen sowie gute Dauergebrauchseigenschaften und somit eine hohe Lebensdauer der Produkte auf.

Im Folgenden soll die Erfindung anhand von Beispielen verdeutlicht werden.

### Beispiele

Die in den Tabellen 2, 3, 5 und 7 aufgeführten Bestandteile wurden mit Wasser als Treibmittel zu Polyurethan-Weichschaum verschäumt.

Hierzu wurde aus den angegebenen Polyetherpolyolen, Katalysatoren und Zusatzstoffen durch Mischung eine Polyolkomponente hergestellt. Die Polyolkomponente wurde mit den angegebenen Polyisocyanaten bei einem Index von 100 miteinander vermischt und in eine offene Form gegeben.

Die Eigenschaften der so erhaltenen Polyurethan-Weichschäume sind in den folgenden Tabellen 4, 6 und 8 angegeben.

Eingesetzte Ausgangsmaterialien:

| | |
|---|---|
| Polyol A: | OH-Zahl 42 mg KOH/g, Polyetherpolyol mit 77% primären OH-Gruppen auf Basis von Propylen- und Ethylenoxid (72 Gew.-%), Starter Glycerin. Die mittlere Funktionalität beträgt 2,7. |
| Polyol B: | OH-Zahl 35 mg KOH/g, Polyetherpolyol mit 72% primären OH-Gruppen auf Basis von Propylen- und Ethylenoxid (13 Gew.-%), Starter Glycerin. Die mittlere Funktionalität beträgt 2,7. |
| Polyol C: | OH-Zahl 48 mg KOH/g, Polyetherpolyol mit weniger als 5% primären OH-Gruppen auf Basis von Propylen- und Ethylenoxid (10 Gew.-%), Starter Glycerin, Ethylenglykol. Die mittlere Funktionalität beträgt 2,5. |
| Polyol D: | OH-Zahl 20 mg KOH/g, Graftpolyol mit 45% Feststoffgehalt (Styrolacrylnitril) in Polyol B als Trägerpolyol. Die mittlere Funktionalität beträgt 2,7. |
| Polyol E: | OH-Zahl 29 mg KOH/g, Polyetherpolyol mit 79% primären OH-Gruppen auf Basis von Propylen- und Ethylenoxid (16 Gew.-%), Starter Glycerin. Die mittlere Funktionalität beträgt 2,7. |

| | |
|---|---|
| DEOA | - Diethanolamin 80% in Wasser |
| DABCO^{®} 33 LV | - Gelkatalysator in Dipropylenglykol (Air Products) |
| Niax^{®} A1 | - Treibkatalysator (Momentive) |
| DABCO^{®} NE 300 | - Treibkatalysator (Air Products) |
| Tegostab^{®} B 4900 | - Sililkonstabilisator (Evonik) |
| Tegostab^{®} B8783 LF2 | - Sililkonstabilisator (Evonik) |
| Isocyanat A: | NCO-Gehalt 31,5 Gew.-%, Mischung aus zwei- und mehrkernigem MDI mit einer Funktionalität von 2,7 |
| Isocyanat B: | NCO-Gehalt 33,5 Gew.-%, 4,4'-MDI (∼99%) |
| Isocyanat C: | NCO-Gehalt 33,5 Gew.-%, Isomerengemisch 4,4'-MDI (∼50%), 2,4'-MDI (∼50%) |

**Tabelle 1:**

| Verwendete Normen für die Schaumprüfungen | | |
|---|---|---|
| **Eigenschaft** | **Einheit** | **Norm** |
| Raumgewicht | kg/m³ | DIN EN ISO 845 |
| Stauchhärte 40% | kPa | DIN EN ISO 3386 |
| Hysterese | % | DIN EN ISO 3386 |
| Zugfestigkeit | kPa | DIN EN ISO 1798 |
| Bruchdehnung | % | DIN EN ISO 1798 |
| Weiterreißwiderst. | N/mm | DIN EN ISO 34-1, B(b) |
| Luftdurchlässigkeit² | dm³/s | DIN EN ISO 7231 |
| Rückprallelastizität | % | DIN EN ISO 8307 |
| DSV¹ - Härteverlust | % | DIN EN ISO 3385 |

| | | |
|---|---|---|
| ¹DSV - Dauerschwingversuch ²gemessen nach Walken des Schaums, um eine vollständige Zellöffnung zu erzielen | | |

**Tabelle 2:**

| Zusammensetzung der eingesetzten Komponente A (Isocyanate A, B und C sowie Polyetherpolyol A) in Gewichtsteilen. Daraus wurde die Zusammensetzung der Komponente | | | | | | | |
|---|---|---|---|---|---|---|---|
| a) in Gew.-% berechnet. Die zu 100 Gew.-% fehlende Menge ist jeweils 2,2'-MDI. | | | | | | | |
| | **Iso** | **Iso ABC** | **Iso** | **Po- lyether- polyol A** | **4,4' MDI [Gew.- %]** | **2,4' MDI [Gew.-%]** | **Mehrker niges MDI [Gew.-**%] |
| Isocyanat 1 | 37,5 | 20,4 | 42,1 | - | 54,8 | 22,4 | 21,8 |
| Isocyanat 2 | 30,0 | 36,3 | 33,7 | - | 63,5 | 18,2 | 17,5 |
| Isocyanat 3 | 35,2 | 35,2 | 17,1 | 12,5 | 64,3 | 11,8 | 23,4 |
| Isocyanat 4 | 26,3 | 44,3 | 29,5 | - | 68,0 | 16,1 | 15,3 |
| Isocyanat 5 | 40,0 | 50,0 | - | 10,0 | 71,4 | 2,7 | 25,9 |
| Isocyanat 6 | 31,3 | 53,5 | 15,2 | - | 71,9 | 9,5 | 18,2 |
| Isocyanat 7 | 28,2 | 48,2 | 13,7 | 10,0 | 71,9 | 9,5 | 18,2 |
| Isocyanat 8 | 24,6 | 54,6 | 12,0 | 8,8 | 75,6 | 8,4 | 15,7 |
| Isocyanat 9 | 29,0 | 61,0 | - | 10,0 | 78,9 | 2,3 | 18,8 |

**Tabelle 3:**

| Einsatzmengen der frei verschäumten Polyurethan-Weichschäume (Gesamtgewicht der eingesetzten Komponenten Isocyanat, Polyole und Additive ca. 2,5 kg). Alle Angaben in Gewichtsteilen. | | | | | | | | | | |
|---|---|---|---|---|---|---|---|---|---|---|
| Beispiel | **V1** | **V2** | **V3** | **V4** | **V5** | **V6** | **1** | **2** | **3** | **4** |
| Polyol A | 65,0 | 70,0 | 80,0 | 80,0 | 80,0 | 80,0 | 75,0 | 80,0 | 80,0 | 80 |
| Polyol B | 15,0 | 10,0 | - | - | 7,0 | - | 5,0 | - | - | 13,0 |
| Polyol C | 7,0 | 7,0 | 20,0 | - | - | 2,0 | 7,0 | 12,0 | 7,0 | 7,0 |
| Polyol D | 13,0 | 13,0 | - | 20,0 | 13,0 | 18,0 | 13,0 | 8,0 | 13,0 | - |
| Isoc. 7 | 49,7 | 49,8 | 50,6 | 49,4 | 49,6 | 49,5 | 49,8 | 50,3 | 49,9 | 50,3 |
| 33 LV | 0,10 | 0,10 | 0,10 | 0,10 | 0,10 | 0,10 | 0,10 | 0,10 | 0,10 | 0,1 |
| NE 300 | 0,30 | 0,30 | 0,30 | 0,30 | 0,30 | 0,30 | 0,30 | 0,30 | 0,30 | 0,3 |
| B 4900 | 1,00 | 1,00 | 1,00 | 1,00 | 1,00 | 1,00 | 1,00 | 1,00 | 1,00 | 1,00 |
| Wasser | 2,45 | 2,45 | 2,45 | 2,45 | 2,45 | 2,45 | 2,45 | 2,45 | 2,45 | 2,45 |
| Index | 100 | 100 | 100 | 100 | 100 | 100 | 100 | 100 | 100 | 100 |
| Gew.-% Polyol A' (Komp. b1) | 69,0 | 74,3 | 80,0 | 87,9 | 85,0 | 87,1 | 79,7 | 83,0 | 85,0 | 80,0 |
| Gew.-% Polyol B' (Komp. b2) | 23,5 | 18,2 | - | 12,1 | 15,0 | 10,8 | 12,9 | 4,6 | 7,6 | 13,0 |
| Gew.-% Polyol C' (Komp. b3) | 7,5 | 7,5 | 20,0 | - | - | 2,1 | 7,4 | 12,4 | 7,4 | 7,0 |
| Weitere Gew.-teile Füllstoff SAN' (Komp. b5) | 5,9 | 5,9 | - | 9,0 | 5,9 | 8,1 | 5,9 | 3,6 | 5,9 | - |

| | | | | | | | | | | |
|---|---|---|---|---|---|---|---|---|---|---|
| Die mit A', B', C' angegebenen Gewichtsmengen sind Gew.-% und summieren sich zu 100 Gew.-%. Die mit SAN' angegebene Menge sind weitere Gewichtsteile zusätzlich zu 100 Gewichtsteilen der Komponenten A', B' und C'. | | | | | | | | | | |

Ein Schaum mit 50 Tl Polyol A, 30 Tl Polyol B, 7 Tl Polyol C und 13 T! Polyol D kollabierte und konnte nicht charakterisiert werden.

**Tabelle 4:**

| Mechanische Eigenschaften der erhaltenen Weichschäume. | | | | | | | | | | |
|---|---|---|---|---|---|---|---|---|---|---|
| Beispiel | **V1** | **V2** | **V3** | **V4** | **V5** | **V6** | **1** | **2** | **3** | **4** |
| Raumgewicht (kg/m³) | 42,4 | 42,3 | 42,3 | 41,4 | 41,8 | 41,6 | 41,7 | 41,4 | 41,6 | 43,0 |
| Stauchhärte 40% (kPa) | 2,6 | 2,7 | 2,5 | 4,4 | 3,6 | 3,5 | 2,7 | 2,4 | 3,0 | 3,5 |
| Hysterese (%) | 26,5 | 26,1 | 24,2 | 24,8 | 22,5 | 23,7 | 24,1 | 23,7 | 23,5 | 24,7 |
| Zugfestigkeit (kPa) | 98 | 85 | 35 | 34 | 38 | 37 | 68 | 61 | 72 | 37 |
| Bruchdehnung (%) | 176 | 168 | 102 | 55 | 75 | 71 | 145 | 136 | 152 | 93 |
| Weiterreißwiderst. (N/mm) | 0,75 | 0,73 | 0,44 | 0,30 | 0,33 | 0,33 | 0,68 | 0,62 | 0,58 | 0,40 |
| Luftdurchlässigkeit² (dm³/s) | 2,0 | 2,9 | 6,4 | 2,0 | 2,5 | 2,6 | 3,8 | 6,0 | 4,8 | 3,9 |
| Rückprallelastizität (%) | 45 | 46 | 47 | 47 | 50 | 48 | 47 | 48 | 49 | 48 |
| DSV¹ - Härteverlust (%) | 16,7 | 16,3 | 21,1 | 22,2 | 17,3 | 16,7 | 14,2 | 15,2 | 14,9 | 15,6 |

| | | | | | | | | | | |
|---|---|---|---|---|---|---|---|---|---|---|
| ¹DSV - Dauerschwingversuch ²gemessen nach Walken des Schaums, um eine vollständige Zellöffnung zu erzielen | | | | | | | | | | |

**Tabelle 5:**

| Bestandteile der frei verschäumten Polyurethan-Weichschäume (Gesamtgewicht der eingesetzten Komponenten Isocyanat, Polyetherpolyole und Additive ca. 2,5 kg). Alle Angaben in Gewichtsteilen. | | | | | | | | | |
|---|---|---|---|---|---|---|---|---|---|
| Beispiel | **5** | **6** | **7** | **8** | **9** | **10** | **3** | **11** | **12** |
| Polyol A | 80,0 | 80,0 | 80,0 | 80,0 | 80,0 | 80,0 | 80,0 | 80,0 | 80,0 |
| Polyol C | 7,0 | 7,0 | 7,0 | 7,0 | 7,0 | 7,0 | 7,0 | 7,0 | 7,0 |
| Polyol D | 13,0 | 13,0 | 13,0 | 13,0 | 13,0 | 13,0 | 13,0 | 13,0 | 13,0 |
| Iso # | Iso 1 | Iso 2 | Iso 3 | Iso 4 | Iso 5 | Iso 6 | Iso 7 | Iso 8 | Iso 9 |
| Teile | 44,3 | 44,1 | 51,9 | 44,0 | 49,4 | 44,1 | 49,9 | 49,0 | 49,0 |
| 33 LV | 0,10 | 0,10 | 0,10 | 0,10 | 0,10 | 0,10 | 0,10 | 0,10 | 0,10 |
| NE 300 | 0,30 | 0,30 | 0,30 | 0,30 | 0,30 | 0,30 | 0,30 | 0,30 | 0,30 |
| B 4900 | 1,00 | 1,00 | 1,00 | 1,00 | 1,00 | 1,00 | 1,00 | 1,00 | 1,00 |
| Wasser | 2,45 | 2,45 | 2,45 | 2,45 | 2,45 | 2,45 | 2,45 | 2,45 | 2,45 |
| Index | 100 | 100 | 100 | 100 | 100 | 100 | 100 | 100 | 100 |
| Gew.-% Polyol A' (Komp. b1) | 85,0 | 85,0 | 85,0 | 85,0 | 85,0 | 85,0 | 85,0 | 85,0 | 85,0 |
| Gew.-% Polyol B' (Komp. b2) | 7,6 | 7,6 | 7,6 | 7,6 | 7,6 | 7,6 | 7,6 | 7,6 | 7,6 |
| Gew.-% Polyol C' (Komp. b3) | 7,4 | 7,4 | 7,4 | 7,4 | 7,4 | 7,4 | 7,4 | 7,4 | 7,4 |
| Weitere Gew.-teile Füllstoff SAN' (Komp. b5) | 5,9 | 5,9 | 5,9 | 5,9 | 5,9 | 5,9 | 5,9 | 5,9 | 5,9 |

| | | | | | | | | | |
|---|---|---|---|---|---|---|---|---|---|
| Die mit A', B', C' angegebenen Gewichtsmengen sind Gew.-% und summieren sich zu 100 Gew.-%. Die mit SAN' angegebene Menge sind weitere Gewichtsteile zusätzlich zu 100 Gewichtsteilen der Komponenten A', B' und C'. | | | | | | | | | |

**Tabelle 6:**

| Mechanische Eigenschaften der erhaltenen Weichschäume. | | | | | | | | | |
|---|---|---|---|---|---|---|---|---|---|
| Beispiel | **5** | **6** | **7** | **8** | **9** | **10** | **3** | **11** | **12** |
| Raumgewicht (kg/m³) | 39,8 | 38,8 | 42,2 | 39,6 | 42,1 | 40,4 | 41,6 | 41,8 | 42,1 |
| Stauchhärte 40% (kPa) | 1,1 | 1,9 | 1,4 | 2,9 | 2,5 | 3,1 | 3,0 | 3,2 | 3,2 |
| Hysterese (%) | 19,3 | 23,1 | 16,7 | 26,2 | 21,7 | 25,1 | 23,5 | 22,6 | 21,1 |
| Zugfestigkeit (kPa) | 48 | 55 | 54 | 56 | 67 | 55 | 72 | 54 | 59 |
| Bruchdehnung (%) | 142 | 152 | 134 | 127 | 139 | 115 | 152 | 107 | 124 |
| Weiterreißwiderst. (N/mm) | 0,54 | 0,61 | 0,45 | 0,60 | 0,52 | 0,51 | 0,58 | 0,45 | 0,44 |
| Luftdurchlässigkeit² (dm³/s) | 4,7 | 4,8 | 5,0 | 4,4 | 4,5 | 4,5 | 4,8 | 4,6 | 5,0 |
| Rückprallelastizität (%) | 33 | 42 | 35 | 48 | 45 | 46 | 49 | 52 | 54 |
| DSV¹ - Härteverlust (%) | 12,5 | 12,0 | 12,3 | 16,4 | 12,1 | 15,4 | 14,9 | 15,7 | 15,0 |

| | | | | | | | | | |
|---|---|---|---|---|---|---|---|---|---|
| ¹DSV - Dauerschwingversuch ²gemessen nach Walken des Schaums, um eine vollständige Zellöffnung zu erzielen | | | | | | | | | |

**Tabelle 7:**

| Bestandteile der frei verschäumten Polyurethan-Weichschäume (Gesamtgewicht der ein gesetzten Komponenten Isocyanat, Polyole und Additive ca. 2.5 Kg). Alle Angaben in Gewichtsteilen. | | | | | |
|---|---|---|---|---|---|
| Beispiel | **V7** | **V8*** | **V9** | **V10^{∗}** | **3** |
| Polyol A | - | - | 1,0 | 1,0 | 80,0 |
| Polyol B | 17,6 | 17,6 | - | - | - |
| Polyol C | - | - | - | - | 7,0 |
| Polyol D | 10,2 | 10,2 | - | - | 13,0 |
| Polyol E | 72,5 | 72,5 | 99,0 | 99,0 | - |
| DEOA | 1,2 | 1,2 | 1,2 | 1,2 | - |
| Iso # | Iso 1 | Iso 7 | Iso1 | Iso 7 | Iso 7 |
| Teile | 49,7 | 56,0 | 51,1 | 56,8 | 49,9 |
| 33 LV | 0,25 | 0,25 | 0,25 | 0,25 | 0,1 |
| NE 300 | 0,15 | 0,15 | - | - | 0,3 |
| Niax A1 | - | - | 0,05 | 0,05 | - |
| B 8783 LF2 | 0,35 | 0,35 | 0,35 | 0,35 | - |
| B 4900 | - | - | - | - | 1,00 |
| Wasser | 2,75 | 2,75 | 3,25 | 3,25 | 2,45 |
| Index | 100 | 100 | 90 | 90 | 100 |

| | | | | | |
|---|---|---|---|---|---|
| * Schäume V8 und V10 kollabierten und konnten nicht charakterisiert werden | | | | | |

**Tabelle 8:**

| Mechanische Eigenschaften der erhaltenen Weichschäume. | | | |
|---|---|---|---|
| Beispiel | **V7** | **V9** | **3** |
| Raumgewicht (kg/m³) | 45,3 | 39,0 | 41,6 |
| Stauchhärte 40% (kPa) | 4,5 | 2,8 | 3,0 |
| Hysterese (%) | 28,3 | 26,6 | 23,5 |
| Zugfestigkeit (kPa) | 74 | 85 | 72 |
| Bruchdehnung (%) | 92 | 124 | 152 |
| Weiterreißwiderst. (N/mm) | 0,34 | 0,45 | 0,58 |
| Luftdurchlässigkeit² (dm³/s) | 0,8 | 1,0 | 4,8 |
| Rückprallelastizität (%) | 56 | 60 | 49 |
| DSV¹ - Härteverlust (%) | 28,0 | 29,9 | 14,9 |

| | | | |
|---|---|---|---|
| ¹DSV - Dauerschwingversuch ²gemessen nach Walken des Schaums, um eine vollständige Zellöffnung zu erzielen | | | |

## Patentansprüche

1. Mischung b enthaltend folgende Komponenten:
b1) 75 bis 94 Gew.-% mindestens eines Polyetherpolyols mit einer Hydroxylzahl von 10 bis 60 mg KOH/g, einer OH-Funktionalität von mehr als 2 und einem Ethylenoxidanteil von 50 bis 100 Gew.-% bezogen auf den Gehalt an Alkylenoxid,
b2) 3 bis 20 Gew.-% mindestens eines Polyetherpolyols mit einer Hydroxylzahl von 10 bis 100 mg KOH/g, einer OH-Funktionalität von mehr als 2, einem Ethylenoxidanteil von 2 bis 30 Gew.-% bezogen auf den Gehalt an Alkylenoxid und einem Anteil an primären OH-Gruppen von 40 bis 100 % bezogen auf die Gesamtzahl der OH-Gruppen in Komponente b2),
b3) 3 bis 20 Gew.-% mindestens eines Polyetherpolyols mit einer Hydroxylzahl von 10 bis 100 mg KOH/g, einer OH-Funktionalität von mehr als 2, einem Ethylenoxidanteil von 0 bis 30 Gew.-% bezogen auf den Gehalt an Alkylenoxid und einem Anteil an primären OH-Gruppen von 0 bis 30 % bezogen auf die Gesamtzahl der OH-Gruppen in Komponente b3),
jeweils bezogen auf die gesamte Gewichtsmenge der Bestandteile b1) bis b3), die 100 Gew.-% ergibt,
sowie
b4) von 0 bis 10 weitere Gewichtsteile mindestens eines weiteren Polyetherpolyols, welches sich von den Bestandteilen b1) bis b3) unterscheidet, bezogen auf 100 Gewichtsteile der Komponenten b1) bis b3) und
b5) von 0 bis 30 weitere Gewichtsteile Füllstoffe, bezogen auf 100 Gewichtsteile der Komponenten b1) bis b3), gegebenenfalls enthalten als Bestandteil eines Graftpolyols auf Basis einer oder mehrerer der Komponenten b1) bis b3).

2. Mischung nach Anspruch 1, wobei der Anteil an primären OH-Gruppen in Bestandteil b2) von 50 bis 100 %, insbesondere von 70 bis 90 %, bezogen auf die Gesamtzahl der OH-Gruppen in Komponente b2) beträgt.

3. Mischung nach Anspruch 1 oder 2, wobei der Anteil an primären OH-Gruppen in Bestandteil b3) von 0 bis 25 %, insbesondere von 0 bis 15 %, bezogen auf die Gesamtzahl der OH-Gruppen in Komponente b3) beträgt.

4. Mischung nach einem oder mehreren der Ansprüche 1 bis 3, wobei die Komponente b2) eine OH-Funktionalität von mindestens 2,4 aufweist.

5. Mischung nach einem oder mehreren der Ansprüche 1 bis 4, wobei die Komponente b3) eine OH-Funktionalität von 2,4 bis 3 aufweist.

6. Mischung nach einem oder mehreren der Ansprüche 1 bis 5, wobei die Komponente b1) eine OH-Funktionalität von mindestens 2,4 aufweist.

7. Mischung nach einem oder mehreren der Ansprüche 1 bis 6, wobei die Komponente b1) einen Anteil an primären OH-Gruppen von 40 bis 100 % bezogen auf die Gesamtzahl der OH-Gruppen der Komponente b1) aufweist.

8. Mischung nach einem oder mehreren der Ansprüche 1 bis 7 enthaltend von 80 bis 92 Gew.-% der Komponente b1), von 4 bis 16 Gew.-% der Komponente b2) und von 4 bis 15 Gew.-% der Komponente b3).

9. Mischung nach einem oder mehreren der Ansprüche 1 bis 8, wobei die Komponente b) von 0,5 bis 8 Gewichtsteile Füllstoff enthalten als Bestandteil eines Graftpolyols auf Basis einer oder mehrerer der Komponenten b1) bis b3) bezogen auf 100 Gewichtsteile der Komponente b1) bis b3) enthält.

10. Verfahren zur Herstellung von Polyurethan-Weichschäume, bei dem man folgende Komponenten zu einer Reaktionsmischung vermischt und zum Polyurethan-Weichschaum umsetzt:
a) mindestens ein Polyisocyanat, wobei mindestens ein Polyisocyanat auf Basis von Diphenylmethandiisocyanat enthalten ist,
b) eine Mischung b gemäß einem oder mehreren der Ansprüche 1 bis 9,
c) gegebenenfalls Kettenverlängerungs- und/oder Vernetzungsmittel,
d) mindestens ein Katalysator, und
e) mindestens ein Treibmittel enthaltend Wasser, sowie gegebenenfalls
f) ein oder mehrere Zusatzstoffe.

11. Verfahren nach Anspruch 10, wobei Komponente a) von 60 bis 100 Gew.-% 4,4'-Diphenylmethandiisocyanat bezogen auf das Gesamtgewicht der Komponente a) enthält.

12. Verfahren nach Anspruch 10 oder 11, wobei Komponente a) von 65 bis 90 Gew.-% 4,4'-Diphenylmethandiisocyanat, von 0 bis 20 Gew.-% 2,4'-Diphenylmethandiisocyanat und von 10 bis 30 Gew.-% mehrkerniges Diphenylmethandiisocyanat jeweils bezogen auf das Gesamtgewicht der Komponente a) enthält.

13. Verfahren nach einem oder mehreren der Ansprüche 10 bis 12, wobei Komponente a) von 68 bis 90 Gew.-%, insbesondere von 70 bis 80 Gew.-%, 4,4'-Diphenylmethandiisocyanat, von 0 bis 20 Gew.-%, insbesondere von 1 bis 10 Gew.-%, 2,4'-Diphenylmethandiisocyanat und von 10 bis 30 Gew.-%, insbesondere von 13 bis 28 Gew.-% mehrkerniges Diphenylmethandiisocyanat jeweils bezogen auf das Gesamtgewicht der Komponente a) enthält.

14. Verfahren nach einem oder mehreren der Ansprüche 10 bis 13, wobei Wasser als alleiniges Treibmittel e) eingesetzt wird.

15. Verfahren nach einem oder mehreren der Ansprüche 10 bis 14, wobei das Raumgewicht nach DIN EN ISO 845 des Polyurethanschaumstoffs von 25 bis 60 kg/m³ beträgt.

16. Verfahren nach einem oder mehreren der Ansprüche 10 bis 15, wobei die Stauchhärte bei 40% gemäß DIN EN ISO 3386 von 2 bis 10 kPa beträgt.

17. Verfahren nach einem oder mehreren der Ansprüche 10 bis 16, wobei die Rückprallelastizität nach DIN EN Iso 8307 des Polyurethan-Weichschaums mindestens 45% beträgt.

18. Polyurethan-Weichschaum, erhältlich nach einem Verfahren gemäß einem der Ansprüche 10 bis 17.

19. Verwendung eines Polyurethan-Weichschaums nach Anspruch 18 als Matratze oder Kissen oder als Polsterelement für Möbel oder als Sitzelement.

## Claims

1. A mixture b comprising the following components:
b1) 75 to 94% by weight of at least one polyether polyol having a hydroxyl value of 10 to 60 mg KOH/g, an OH functionality of more than 2, and ethylene oxide in a proportion of 50 to 100% by weight based on the content of alkylene oxide,
b2) 3 to 20% by weight of at least one polyether polyol having a hydroxyl value of 10 to 100 mg KOH/g, an OH functionality of more than 2, ethylene oxide in a proportion of 2 to 30% by weight based on the content of alkylene oxide, and a proportion of primary OH groups of 40 to 100% based on the total number of OH groups in component b2),
b3) 3 to 20% by weight of at least one polyether polyol having a hydroxyl value of 10 to 100 mg KOH/g, an OH functionality of more than 2,
ethylene oxide in a proportion of 0 to 30% by weight based on the content of alkylene oxide, and a proportion of primary OH groups of 0 to 30% based on the total number of OH groups in component b3),
in each case based on the total amount by weight of components b1) to b3), which comes to 100% by weight, and also
b4) from 0 to 10 further parts by weight, based on 100 parts by weight of components b1) to b3), of at least one further polyether polyol that differs from components b1) to b3), and
b5) from 0 to 30 further parts by weight of fillers, based on 100 parts by weight of components b1) to b3), optionally present as a constituent of a graft polyol based on one or more of components b1) to b3).

2. The mixture according to claim 1, wherein the proportion of primary OH groups in component b2) based on the total number of OH groups in component b2) is from 50 to 100%, particularly preferably from 70 to 90%.

3. The mixture according to claim 1 or 2, wherein the proportion of primary OH groups in component b3) based on the total number of OH groups in component b3) is from 0 to 25%, particularly preferably from 0 to 15%.

4. The mixture according to one or more of claims 1 to 3, wherein component b2) has an OH functionality of at least 2.4.

5. The mixture according to one or more of claims 1 to 4, wherein component b3) has an OH functionality of 2.4 to 3.

6. The mixture according to one or more of claims 1 to 5, wherein component b1) has an OH functionality of at least 2.4.

7. The mixture according to one or more of claims 1 to 6, wherein component b1) has a proportion of primary OH groups of 40 to 100% based on the total number of OH groups in component b1).

8. The mixture according to one or more of claims 1 to 7 comprising from 80 to 92% by weight of component b1), from 4 to 16% by weight of component b2), and from 4 to 15% by weight of component b3).

9. The mixture according to one or more of claims 1 to 8, wherein component b) comprises from 0.5 to 8 parts by weight of filler present as a constituent of a graft polyol based on one or more of components b1) to b3), based on 100 parts by weight of components b1) to b3) .

10. A process for producing flexible polyurethane foams in which the following components are mixed to form a reaction mixture and converted into the flexible polyurethane foam:
a) at least one polyisocyanate, wherein at least one of the polyisocyanates present is based on diphenylmethane diisocyanate,
b) a mixture b according to one or more of claims 1 to 9,
c) optionally chain extenders and/or crosslinkers,
d) at least one catalyst, and
e) at least one blowing agent comprising water, and optionally
f) one or more additives.

11. The process according to claim 10, wherein component a) comprises from 60 to 100% by weight of 4,4'-diphenylmethane diisocyanate based on the total weight of component a).

12. The process according to claim 10 or 11, wherein component a) comprises from 65 to 90% by weight of 4,4'-diphenylmethane diisocyanate, from 0 to 20% by weight of 2,4'-diphenylmethane diisocyanate, and from 10 to 30% by weight of multiring diphenylmethane diisocyanate, in each case based on the total weight of component a).

13. The process according to one or more of claims 10 to 12, wherein component a) comprises from 68 to 90% by weight, particularly preferably from 70 to 80% by weight, of 4,4'-diphenylmethane diisocyanate, from 0 to 20% by weight, particularly preferably from 1 to 10% by weight, of 2,4'-diphenylmethane diisocyanate, and from 10 to 30% by weight, particularly preferably from 13 to 28% by weight, of multiring diphenylmethane diisocyanate, in each case based on the total weight of component a).

14. The process according to one or more of claims 10 to 13, wherein water is used as sole blowing agent e).

15. The process according to one or more of claims 10 to 14, wherein the foam density according to DIN EN ISO 845 of the polyurethane foam is from 25 to 60 kg/m³.

16. The process according to one or more of claims 10 to 15, wherein the compression hardness at 40% according to DIN EN ISO 3386 is from 2 to 10 kPa.

17. The process according to one or more of claims 10 to 16, wherein the rebound resilience of the flexible polyurethane foam according to DIN EN ISO 8307 is at least 45%.

18. A flexible polyurethane foam obtainable by a process according to any of claims 10 to 17.

19. The use of a flexible polyurethane foam according to claim 18 as a mattress or cushion or as a cushioning element for furniture or as a seat element.

## Revendications

1. Mélange b contenant les composants suivants :
b1) 75 à 94 % en poids d'au moins un polyétherpolyol ayant un indice d'hydroxyle de 10 à 60 mg de KOH/g, une fonctionnalité OH de plus de 2 et une proportion d'oxyde d'éthylène de 50 à 100 % en poids par rapport à la teneur en oxyde d'alkylène,
b2) 3 à 20 % en poids d'au moins un polyétherpolyol ayant un indice d'hydroxyle de 10 à 100 mg de KOH/g, une fonctionnalité OH de plus de 2, une proportion d'oxyde d'éthylène de 2 à 30 % en poids par rapport à la teneur en oxyde d'alkylène et une proportion de groupes OH primaires de 40 à 100 % par rapport au nombre total des groupes OH dans le composant b2),
b3) 3 à 20 % en poids d'au moins un polyétherpolyol ayant un indice d'hydroxyle de 10 à 100 mg de KOH/g, une fonctionnalité OH de plus de 2, une proportion d'oxyde d'éthylène de 0 à 30 % en poids par rapport à la teneur en oxyde d'alkylène et une proportion de groupes OH primaires de 0 à 30 % par rapport au nombre total des groupes OH dans le composant b3),
chaque fois par rapport à la quantité totale en poids des composants b1) à b3), qui représente 100 % en poids,
ainsi que
b4) de 0 à 10 parties en poids supplémentaires d'au moins un autre polyétherpolyol qui est différent des composants b1) à b3), par rapport à 100 parties en poids des composants b1) à b3) et
b5) de 0 à 30 parties en poids supplémentaires de charges, par rapport à 100 parties en poids des composants b1) à b3), éventuellement contenues en tant que constituant d'un polyol greffé à base d'un ou de plusieurs des composants b1) à b3).

2. Mélange selon la revendication 1, dans lequel la proportion de groupes OH primaires dans le composant b2) vaut de 50 à 100 %, en particulier de 70 à 90 %, par rapport au nombre total des groupes OH dans le composant b2).

3. Mélange selon la revendication 1 ou 2, dans lequel la proportion de groupes OH primaires dans le composant b3) vaut de 0 à 25 %, en particulier de 0 à 15 %, par rapport au nombre total des groupes OH dans le composant b3).

4. Mélange selon une ou plusieurs des revendications 1 à 3, dans lequel le composant b2) présente une fonctionnalité OH d'au moins 2,4.

5. Mélange selon une ou plusieurs des revendications 1 à 4, dans lequel le composant b3) présente une fonctionnalité OH de 2,4 à 3.

6. Mélange selon une ou plusieurs des revendications 1 à 5, dans lequel le composant b1) présente une fonctionnalité OH d'au moins 2,4.

7. Mélange selon une ou plusieurs des revendications 1 à 6, dans lequel le composant b1) présente une proportion de groupes OH primaires de 40 à 100 % par rapport au nombre total des groupes OH du composant b1) .

8. Mélange selon une ou plusieurs des revendications 1 à 7, contenant de 80 à 92 % en poids du composant b1), de 4 à 16 % en poids du composant b2) et de 4 à 15 % en poids du composant b3).

9. Mélange selon une ou plusieurs des revendications 1 à 8, dans lequel le composant b) contient de 0,5 à 8 parties en poids de charge contenue en tant que constituant d'un polyol greffé à base d'un ou de plusieurs des composants b1) à b3), par rapport à 100 parties en poids des composants b1) à b3).

10. Procédé pour la production de mousses souples de polyuréthane, dans lequel on mélange les composants suivants pour obtenir un mélange réactionnel et on les fait réagir pour aboutir à la mousse souple de polyuréthane :
a) au moins un polyisocyanate, au moins un polyisocyanate à base de diisocyanate de diphénylméthane étant contenu,
b) un mélange b selon une ou plusieurs des revendications 1 à 9,
c) éventuellement un agent de réticulation et/ou un agent d'extension de chaîne,
d) au moins un catalyseur, et
e) au moins un agent porogène comportant de l'eau, ainsi qu'éventuellement
f) un ou plusieurs additifs.

11. Procédé selon la revendication 10, dans lequel le composant a) contient de 60 à 100 % en poids de 4,4'-diisocyanate de diphénylméthane par rapport au poids total du composant a).

12. Procédé selon la revendication 10 ou 11, dans lequel le composant a) contient de 65 à 90 % en poids de 4,4'-diisocyanate de diphénylméthane, de 0 à 20 % en poids de 2,4'-diisocyanate de diphénylméthane et de 10 à 30 % en poids de diisocyanate de diphénylméthane à plusieurs cycles, chaque fois par rapport au poids total du composant a).

13. Procédé selon une ou plusieurs des revendications 10 à 12, dans lequel le composant a) contient de 68 à 90 % en poids, en particulier de 70 à 80 % en poids, de 4,4'-diisocyanate de diphénylméthane, de 0 à 20 % en poids, en particulier de 1 à 10 % en poids, de 2,4'-diisocyanate de diphénylméthane et de 10 à 30 % en poids, en particulier de 13 à 28 % en poids, de diisocyanate de diphénylméthane à plusieurs cycles, chaque fois par rapport au poids total du composant a).

14. Procédé selon une ou plusieurs des revendications 10 à 13, dans lequel de l'eau est utilisée comme seul agent porogène e).

15. Procédé selon une ou plusieurs des revendications 10 à 14, dans lequel le poids spécifique selon DIN EN ISO 845 de la mousse de polyuréthane vaut de 25 à 60 kg/m³.

16. Procédé selon une ou plusieurs des revendications 10 à 15, dans lequel la compression sous contrainte à 40 % selon DIN EN ISO 3386 vaut de 2 à 10 kPa.

17. Procédé selon une ou plusieurs des revendications 10 à 16, dans lequel la résilience selon DIN EN ISO 8307 de la mousse souple de polyuréthane est d'au moins 45 %.

18. Mousse souple de polyuréthane, pouvant être obtenue conformément à un procédé selon l'une quelconque des revendications 10 à 17.

19. Utilisation d'une mousse souple de polyuréthane selon la revendication 18, sous forme de matelas ou de coussin, ou sous forme d'élément de garnissage pour meubles ou sous forme d'élément d'assise.
